# EUROPÄISCHE PATENTSCHRIFT

(11) **EP 2 796 195 B1**
(45) Veröffentlichungstag und Bekanntmachung des Hinweises auf die Patenterteilung: **27.03.2019**
(21) Anmeldenummer: 13164790.1
(22) Anmeldetag: 22.04.2013
(51) Int. Cl.: B01J 19/24, B01J 19/00, B01J 4/00, B01F 5/06, B01F 13/10, B01F 15/06, F28F 13/06, F28F 9/26, F28D 7/16, F28D 21/00

(54) **KONTINUIERLICHER ROHRREAKTOR**
CONTINUOUS TUBULAR REACTOR
RÉACTEUR TUBULAIRE CONTINU

(43) Veröffentlichungstag der Anmeldung: 29.10.2014
(73) Patentinhaber: Fluitec Invest AG, 8442 Hettlingen (CH)
(72) Erfinder: Georg, Alain, 8442 Hettlingen (CH); Altenburger, Daniel, 8461 Oerlingen (CH); Vögeli, Tobias, 8400 Winterthur (CH); Eiholzer, Adrian, 8335 Hittnau (CH)
(74) Vertreter: Liebetanz, Michael

(56) Entgegenhaltungen:
- EP-A1- 0 009 638
- EP-A1- 0 391 846
- EP-A1- 2 113 732
- CA-A1- 2 225 293
- US-A- 5 484 882

## Beschreibung

### TECHNISCHES GEBIET

Die Erfindung betrifft einen kontinuierlichen Rohrreaktor mit mindestens zwei in Flussrichtung von einzufüllenden Reaktanden hintereinander angeordneten Stufen von Wärmetauschermischern mit jeweils einem Innenvolumen, in dem jeweils Wärmetauscherrohre geführt sind, wobei in jeder Stufe mindestens ein Mischelement vorgesehen ist, welches im Querschnitt das Innenvolumen über die Länge der Wärmetauscherrohre ausfüllt und dabei die in Längsrichtung der Stufe verlaufenden Abschnitte der Wärmetauscherrohre umgibt, mit den Merkmalen des Oberbegriffs des Anspruchs 1.

### STAND DER TECHNIK

Aus der DE 280 88 54 ist ein Doppelmantel - Mischer - Wärmetauscher bekannt. Dies ist ein statischer Mischer, welcher über einen doppelten Aussenmantel verfügt und der ebenfalls als Wärmetauscher eingesetzt werden kann.

Andere Mischer/Wärmetauscher sind Strömungsröhre, die statische Mischelemente aufweisen, und in denen zusätzlich ein Rohrbündel ausgerüstet ist. So kann das Verhältnis aus Wärmeaustauschfläche zum Leerrohr Volumen, auch als A/V-Verhältnis bezeichnet trotz zunehmendem Rohrdurchmesser bei einer Skalierung des Wärmetauschers konstant oder zu mindestens gross gehalten werden. Die Rohrbündel können die Mischleistung verschlechtern. Zudem ergeben sich am Ein- und Austritt der Apparate konstruktionsbedingt unterschiedliche Bauformen, welche für die Strömung unvorteilhaft sind.

Die Mischleistung nach der Patentschrift DE 28 39 563 ist nicht zufriedenstellend, da ein Rohrbündel jeweils nur in eine Achsenrichtung mischt. Es müssen also mehrere Bündel um 90 Grad verdreht in Serie geschalten werden, um eine entsprechende Mischleistung zu erzielen.
Ein statischer Mischer/Wärmetauscher, bei dem ein entsprechendes Konzept verwirklicht ist aus der EP1 067 352 und der WO2008/141472 bekannt. Diese statischen Mischer/Wärmetauscher weisen für sich alleine genommen eine sehr gute Mischleistung auf. Ein weiterer Mischer/Wärmetauscher ist aus EP2 113 732 bekannt.

Kontinuierliche Rohrreaktoren mit Wärmetauschrohren die auch als statische Mischelemente wirken sind aus EP 0 009 638 und US 5,484,882 bekannt.
Diese Wärmetauscher sind beliebig in Durchmesser und Länge skalierbar. In Bezug auf den Durchmesser tritt das oben erwähnte Problem der Ein-, Übergangs- und Ausströmung bedingt durch die Wärmeaustauschrohre auf. Dies führt dazu, dass sich an der Ein-, Übergangs- und Ausströmung das Produkt örtlich überhitzt bzw. auch zeitlich unterschiedlich verweilt.
In einen kontinuierlichen arbeitenden Rohrreaktor werden daher gemäss dem Stand der Technik mehrere solcher Mischer/Wärmetauscher teilweise dabei auch mit unterschiedlicher Nennweiten, in Serie geschaltet. Typische herstellungsbedingte Baulängen vom Mischer/Wärmetauscher liegen bei 2 bis 4 Meter Länge und Durchmessern von 6 bis 2000 Millimeter. Bei einer Serienschaltung von beispielsweise 4 oder 5 Exemplaren werden also Reaktionslängen vom 10 bis 20 Metern erreicht. Die einzelnen Mischer/Wärmetauscher werden durch EN- oder ANSI-Flansche verbunden. Es sind auch andere Rohrverbindungen oder Verschraubungen oder Flansche üblich. Dabei können diese Lehrrohrabschnitte ebenfallt konische Ein- und Ausläufe aufweisen.
Problematisch ist bei dieser Hintereinanderschaltung, dass Leerohrabschnitte sowie konische Ein- und Ausläufe bestehen, welche bei Reynoldszahlen kleiner 2400, also bei einer laminaren Strömung, ein sehr schlechtes Verweilzeitspektrum ergeben, was zu Störungen im Verweilzeitverhalten führt. Die Flanschverbindungen können zu lokalen Überhitzungen oder Unterkühlungen des im Rohr strömenden Produktes führen. Diese lokalen Störungen können sich negativ auf die Selektivität und die Ausbeute auswirken. Es gibt Anbackungen und vercracktes Material in den Übergängen und Umlenkungen der inneren Wärmetauscherrohre. Dies führt zu einer gestörten Reaktionsführung, was bedeutet, dass die Reaktoren in kurzen Zeitanständen gereinigt und gewartet werden müssen.

### DARSTELLUNG DER ERFINDUNG

Basierend auf diesem Stand der Technik, liegt der Erfindung die Aufgabe zugrunde, einen verbesserten kontinuierlicher arbeitenden Rohrreaktor zu schaffen, welcher die erwähnten Nachteile nach dem Stand der Technik ausräumt. Insbesondere soll der Rohreaktor eine verbesserte Leistung bezüglich des Misch- und Verweilzeitverhaltens sowie auch des Wärmetausches an den lokalen kritischen Stellen während der Reaktion aufweisen. Die Standzeit vor der Notwendigkeit von Wartungsarbeiten soll dabei erhöht werden.

Diese Aufgabe wird erfindungsgemäss mit einem Rohrreaktor mit den Merkmalen des Anspruchs 1 erreicht.

Ein kontinuierlicher Rohrreaktor weist mindestens zwei in Flussrichtung von einzufüllenden Reaktanden hintereinander angeordneten Stufen von Wärmetauschermischern mit jeweils einem Innenvolumen auf. Dabei bedeutet in Flussrichtung hintereinander nicht unbedingt geometrisch hintereinander, da Überleitungsbereiche vorgesehen sein können, die eine 90 Grad oder meist 180 Grad Umlenkung der Flussrichtung bedeuten, um so kompaktere Anlagen bauen zu können. In diesen Stufen sind jeweils Wärmetauscherrohre geführt, wobei in jeder Stufe mindestens ein Mischelement vorgesehen ist, welches im Querschnitt das Innenvolumen über die Länge der Wärmetauscherrohre ausfüllt und dabei die in Längsrichtung der Stufe verlaufenden Abschnitte der Wärmetauscherrohre umgibt. Für die Erfindung sind nun in jeder Überleitung zwischen zwei aufeinanderfolgenden Stufen von Wärmetauschermischern mindestens ein Überleitungs-Mischelement angeordnet, welches im Querschnitt das Innenvolumen der Überleitung ausfüllt. Mit anderen Worten, Statt nur Mischer im geraden Teil der Wärmetauscherrohre vorzusehen und die Überleitungen in den dünnen Rohren unberücksichtigt zu lassen, sind diese für eine kontinuierliche Durchmischung der Reaktanden auch ohne Wärmetauscherrohre mit diesen Überleitungs-Mischelementen gefüllt, bei denen es sich auch um mehrere, jeweils um 90 Grad zueinander verdrehte Einheiten handeln kann.

Vorzugsweise sind dann das oder die Überleitungs-Mischelemente so ausgelegt, dass sie die Überleitung im wesentlichen vollständig ausfüllen, mit anderen Worten, zum einen bis an den Innendurchmesser des Überleitungsrohrs reichen und zum anderen vom Anfang bis zum Ende des Überleitungsbereichs oder Überleitungsrohrs diesen Bereich ausfüllen, so dass kein wesentlicher Teil dieses Rohrs nicht mit Mischerblättern gefüllt ist.

Weiter weisen Umlenkungsbereiche der Wärmetauscherrohre innerhalb einer Stufe Umlenkungs-Mischelemente auf, die die um 180 Grad gebogenen Wärmetauscherrohre im wesentlichen vollständig abdecken. Dies bedeutet, dass bei konventionellen Mischern die Mischelemente eben nur die "geraden" Abschnitte von Wärmetauscherrohren abdecken und insbesondere die Umlenkungsbereiche des Rohrreaktors nur von den Wärmetauscherrohren gefüllt sind, so dass dort keine Mischung stattfindet. Dies wird mit den oben genannten Merkmalen nun verhindert.

Der Einleitungsbereich der Wärmetauscherrohre weist zudem vorteilhafterweise Einleitungs-Mischelemente auf, die die Wärmetauscherrohre von ihrem Austritt aus der Wand des Einleitungsbereiches an bis zum ersten im dem Wärmetauscherrohr angeordneten Mischelement im wesentlichen vollständig abdecken.

Ferner kann jede Stufe des Rohrreaktors ein zentrales das Innenvolumen bereitstellende Rohr und an den beiden Enden des Rohrs ein mit dem Rohr verbundenen Einlaufbereich beziehungsweise ein mit dem Rohr verbundenen Auslaufbereich umfassen.

Die Verbindung zwischen Einlaufbereich oder Auslaufbereich und Rohr kann eine verschraubte Flanschverbindung, eine umfänglich verlaufende Schweissverbindung oder eine Rohrschraubverbindung sein.

Die Zuleitung bzw. die Ableitung der Reaktanden aus dem Rohrreaktor verläuft in besonders raumsparenden Ausführungsformen quer zur Hauptachse einer Stufe des Rohrreaktors und wird tangential zur Aussenwand umgeleitet, so dass die einzelnen Stufen nebeneinander und übereinander sozusagen im räumlich getrennten Gegenstrom angeordnet werden können.

Bevorzugt verläuft die Zuleitung bzw. die Ableitung der Reaktanden aus dem Rohrreaktor in Richtung der Hauptachse einer Stufe des Rohrreaktors und die Aufweitung bzw. Verringerung vom Innenvolumendurchmesser der Zuleitung zum Innenvolumendurchmesser der Stufe bzw. vom Innenvolumendurchmesser der Stufe zum Innenvolumendurchmesser der Ableitung ist durch einen konischen, oder im Querschnitt elliptischen, parabelförmigen oder hyperboloiden Wandverlauf beschreibbar.

Weitere vorteilhafte Ausführungsformen sind in den Unteransprüchen gekennzeichnet.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische teilweise geschnittene Darstellung eines Rohrreaktors gemäss einem Ausführungsbeispiel der Erfindung;
- Fig. 2: eine schematische teilweise geschnittene Darstellung eines zweistufigen Rohrreaktors gemäss einem weiteren Ausführungsbeispiel der Erfindung;
- Fig. 3: eine weitere schematische teilweise geschnittene Darstellung des zweistufigen Rohrreaktors nach Fig. 2;
- Fig. 4: eine schematische teilweise geschnittene Darstellung eines dreistufigen Rohrreaktors gemäss einem weiteren Ausführungsbeispiel der Erfindung;
- Fig. 5: eine schematische teilweise geschnittene Darstellung einer Stufe eines Rohrreaktors ähnlich zu dem nach Fig. 4; und
- Fig. 6: eine schematische perspektivische Darstellung einer Stufe eines Rohrreaktors nach Fig. 5.

### BESCHREIBUNG BEVORZUGTER AUSFÜHRUNGSFORMEN

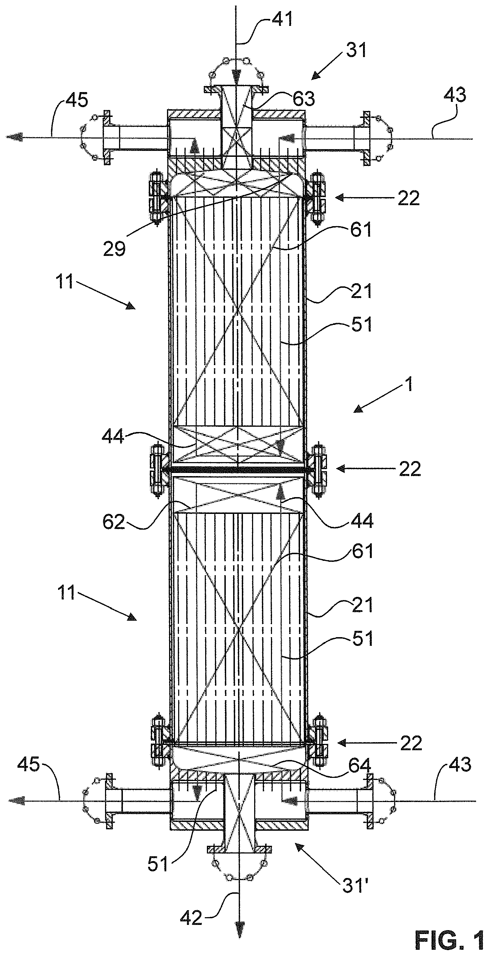

Die Fig. 1 zeigt eine schematische und teilweise geschnittene Darstellung eines Rohrreaktors 1 gemäss einem Ausführungsbeispiel der Erfindung. Das zu behandelnde bzw. zu reagierende Fluid wird entlang dem Pfeil 41 (hier zeichnerisch oben) in die Vorrichtung eingespeist und tritt entsprechende dem Pfeil 42 (hier zeichnerisch unten) aus der Vorrichtung heraus. Die Vorrichtung besteht aus zwei Rohrstufen 11, die über Übergangsabschnitte 22 miteinander und mit den Einlässen und Auslässen verbunden sind. An jedem Übergangsabschnitt 22 bestehen über den äusseren Rohrdurchmesser überstehende Flansche, die im dargestellten Ausführungsbeispiel über eine Vielzahl von entlang dem Umfang angeordnete verschraubte Verbindungen, von denen in der Fig. 1 jeweils zwei gegenüberliegende dargestellt sind, zusammen gehalten werden. Die Rohre 11 sind dabei über ihren Innendurchmesser hin gleich ausgestaltet und stossen in dem Übergangsbereich aufeinander und an den Einlässen und Auslässen auf Innenvolumina mit gleichen Innendurchmessern.

Am Eingangsbereich ist ein Einlauf 31 vorgesehen, der ebenfalls mit einem Flansch versehenen Übergangsbereich 22 mit der ersten Rohrstufe 11 verbunden ist. Auf der Auslaufseite ist ein weiterer Übergangsabschnitt 22 vorgesehen, mit dem die Rohrstufe 11 mit einem Auslauf 31' verbunden ist.

Der Einlauf 31 umfasst einen, einen dünneren Durchmesser aufweisenden Einlaufbereich entsprechend dem Pfeil 41, welcher rohrförmige Einlauf sich dann zu dem Rohrdurchmesser 21 der Rohrstufe 11 aufweitet. Die dabei gewählte Kurvenform der rotationssymmetrischen Aufweitung 29 entspricht hier im Querschnitt einer hyperbelähnlichen Aufweitung; es kann ja auch ein einfacher Konus oder eine parabelförmige oder elliptische Aufweitung vorgesehen sein. Wesentlich ist, dass am Einlauf 31 querverlaufend dazu verlaufend ein Wärmetauscherfluideinlauf 43 vorgesehen ist, dem auf der gegenüberliegenden Seite ein Wärmetauscherfluidauslauf 45 angeordnet ist. Das entsprechende Rohr ist nicht durchgehend, sondern wird durch den Reaktandeneinlauf 41 sowie durch Bleche, welche hier in der Fig. 1 nicht sichtbar sind, voneinander getrennt. Damit fliesst das Wärmetauscherfluid entsprechend dem Pfeil 43 in eine Umlenkung in Richtung des Flusses der Reaktanden im Rohr 11 in Wärmetauscherrohren 51, die hier nur schematisch dargestellt sind. Diese Wärmetauscherrohre 51 sind im dargestellten Ausführungsbeispiel beispielsweise ähnlich wie in der EP 1 067 352 ausgestaltet. Es handelt sich dabei hier um eine Reihe von Rohren 51, auch Rohrbündel genannt, die als Paket auf der hier in der Fig. 1 rechten Seite zeichnerisch und in Fluidflussrichtung in Bezug auf ihren Inhalt nach unten verlaufen und im Bereich vor dem Übergangsabschnitt 22 an dem Ende der ersten Rohrstufe 11 U-förmig in der Wärmetauscherfluidumlenkung 44 zurück gebogen werden, um im zeichnerisch linken Bereich der Rohrstufe 11 wieder in Wärmetauscherfluidrichtung nach oben zu verlaufen und nach Durchstossen der Wände des Übergangsabschnittes 22 hinter der Kurve 29 in den Wärmetauscherfluidauslauf 45 zu münden. Das Durchstossen der Rohre 51 durch die Wände ist hier durch Striche angedeutet.

Derselbe Aufbau ist spiegelsymmetrisch in der zweiten, hier unten dargestellten Rohrstufe 11 vorgesehen, wobei hier der Wärmetauscherfluideinlauf 43 von rechts kommend in dem rechten Bereich der zweiten Rohrstufe 11 zeichnerisch nach oben geleitet wird, wobei die Wärmetauscherrohre 51 dann im Bereich der Wärmetauscherfluidumlenkung 44 vor dem mittigen Übergangsschnitt 22 um 180 Grad gewendet und im linken Bereich der Rohrstufe 11 zum Wärmetauscherfluidauslauf 45 geführt werden.

Mit dem Bezugszeichen 61 ist schematisch als Kreuz eine Mischerblech-Anordnung dargestellt, die in Bezug auf die geraden Rohranteile des Wärmetauschers nach einer beliebigen Ausführung des Standes der Technik, beispielsweise wie in der EP 1 067 352 beschrieben, angeordnet sein kann. Durch das Zeichnen einer einfachen Kreuzform als Mischerblech-Anordnung 61 soll hier nicht angedeutet werden, dass nur ein Mischer-Paket vorgesehen ist; es könnten auch mehrere hintereinander angeordnete Mischerbleche vorgesehen sein, die insbesondere in einem Winkel, üblicherweise 90° zueinander angeordnet sein können.

Gemäss der Erfindung ist hier im mittleren Bereich der beiden Umlenkungen 44 jeweils ebenfalls eine Mischerblechanordnung 62 vorgesehen, die hier schematisch ebenfalls durch ein solches Kreuz dargestellt ist. Somit ist die gesamte Abfolge der beiden Rohrstufen 11 hindurch eine Mischblechanordnung 63, 61, 62, 62, 61, 63 vorgesehen und kein Teil des dortigen Bereichs der Wärmetauscherrohre 51 ist nicht von solchen Mischerblechelementen umgeben. Dasselbe gilt somit auch für den Zulauf 41 und den Ablauf 42, wobei eine Mischerblechanordnung 63 bzw. 64 nach einer beliebigen Ausführung des Standes der Technik, beispielsweise wie in der EP 2 286 904 sowohl im engeren Zuführungsrohr des Zulaufes bzw. des Ablaufes vorgesehen sind, als auch im Bereich der sich konisch aufweitenden oder sich verjüngenden Bereiche 29 des Auslaufs bzw. Zulaufs.

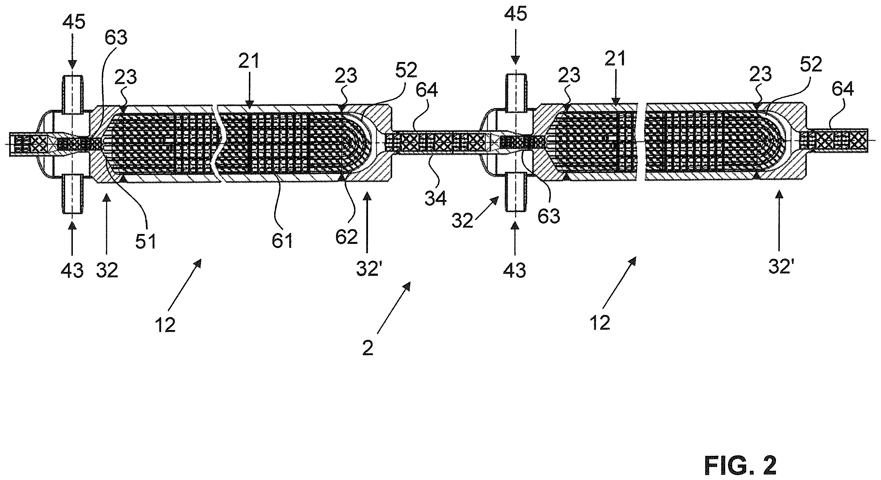

Die Fig. 2 zeigt eine schematische teilweise geschnittene Darstellung eines zweistufigen Rohrreaktors 2 gemäss einem weiteren Ausführungsbeispiel der Erfindung. Hier sind, wie über die ganze Beschreibung hinweg, jeweils in allen Zeichnungen ähnliche Merkmale mit gleichen oder ähnlichen Bezugszeichen versehen.

Es ist von der linken Seite her der Zulauf zu sehen, bei dem die Wärmetauscherfluideinläufe 43 bzw. -ausläufe 45 wie in Fig. 1 dargestellt sind. Im direkten Eingangsbereich ist im dünnen Zugangsrohr, also in dem Rohr mit einem gegenüber dem Rohr 21 der Stufe 12 kleineren Durchmesser, eine Mischerblechanordnung 63 vorgesehen, die in Längsrichtung bis an die Enden des Rohres und gegenüber dem Innendurchmesser bis zu dem Rand und optional ggf. in den Bereich des sich aufweitenden, hier des sich konisch aufweitenden Übergangsbereiches des Einlaufes 32, reicht. Diesem Übergangsbereich folgend ist ein hier beispielsweise als einstückiges Rohr 21 ausgestaltete und angeordnete Rohrstufe vorgesehen, an die sich ausgangsseitig ein Auslauf 32' anschliesst. Die drei Elemente 32, 21, 32' eines Rohrs sind mit Übergangsabschnitten 23 verbunden, hier als im Rohrmantel dargestellte Dreiecke, bei denen es sich um dem Umfang folgende und dort verlaufende Schweissungen der besagten Elemente 31, 21 und 32' aneinander handelt. Es könnte doch jedoch auch eine Flanschverbindung wie in Fig. 1 ausgewählt sein.

Das Rohr 21 ist wie beim vorherigen Ausführungsbeispiel, mit einer Vielzahl von innen angeordneten Wärmetauscherrohren 51 versehen, die an dem auslaufseitigen Ende durch die Wärmetauscher U-Umlenkungsrohre 52 in sich selber in die andere seitliche Hälfte der Rohrreaktorstufe 12 umgekehrt sind.

Das Rohr 21 ist hier mit einer Vielzahl von aufeinanderfolgenden Mischerblechanordnungen versehen, die sich durch die angegliederte Mischerblechanordnung 62 ebenfalls in die U-förmige Umlenkung hinein weiter erstrecken. Der Auslaufbereich 32' ist im vorliegenden Fall im Querschnitt halbkreisförmig ausgeführt, also in der Draufsicht auf das Element 32' stellt der Auslauf eine hohlkugelige Form mit zentriertem Auslaufbereich dar. Dieser Übergangsbereich 34 zwischen den beiden Stufen 12 ist ein engeres Rohr, welches beispielsweise einstückig mit dem Einlauf 32 oder dem Auslauf 32' verbunden sein kann. Das engere Rohr des Übergangsbereichs 34 ist fluchtend konzentrisch mit dem Rohr 21 des ersten Wärmetauschers ausgerichtet.

Das Rohr des Übergangsbereichs 34 führt hier in die zweite Stufe, die wiederum durch die Wärmetauscherfluideinläufe 43 bzw. -ausläufe 45 gekennzeichnet ist. Dabei ist dieser Bereich ebenfalls durch die Mischerblechanordnung 63 gefüllt.

Die zweite Stufe 12 ist dann analog zur ersten Stufe 12 ausgeführt.

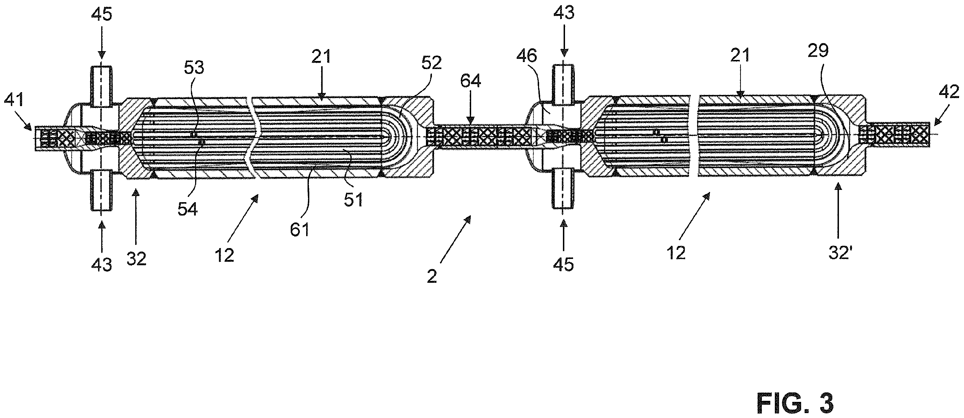

Die Fig. 3 zeigt eine weitere schematische teilweise geschnittene Darstellung des Rohrreaktors nach Fig. 2, wobei auf die Darstellung verschiedener in der Fig. 2 gezeichneter Elemente verzichtet worden ist oder diese anders dargestellt worden sind, um weitere Erläuterungen liefern zu können.

Insbesondere ist hier, wie auch in der Fig. 1 zu sehen, die Mischerblechanordnung 61 nur als angedeutetes schematisches Kreuz dargestellt, um die von diesen umgebenen und somit quasi darin verlaufenden Wärmetauscherrohre 51 besser darstellen zu können. Es handelt sich bei der hier dargestellten Ausführungsform um im Querschnitt dargestellt vier im oberen Bereich der Fig. 3 funktional das Wärmetauscherfluid zuführenden Rohre, die nach dem Umlenkungsbereich 52 wieder in unteren Bereich zurückgeführt werden. In der Tat enthält ein solches Paket mehr Rohre 51 als in einer Ebene dargestellt, hier bei Fig. 3 insbesondere mindestens zwölf Rohre 51, wobei nicht alle Rohre sichtbar sind. Die Anzahl der Wärmetauscherrohre 51 skaliert mit dem Durchmesser des Rohrs 11 oder 21 bei gleichbleibendem Durchmesser der Wärmetauscherrohre 51. Die Anzahl ist ferner abhängig vom Durchmesser der Wärmetauscherrohre 51 im Vergleich zum Rohr 11 bzw. 21, wobei diese Grösse auch von der im Reaktor vorgesehenen und dann ablaufenden Reaktion abhängt.

Dabei erfolgt die Speisung der hier dargestellten drei oberen Rohre durch die Wand der konischen Aufweitung 29 hindurch aus den Einläufen 43 bzw. Ausläufen 45. Diese Speisung ist für das hier dargestellte mittlere Rohr 51 nicht möglich, da dieses hier zentrisch auf Grund der koaxialen Bauweise des Rohrreaktors 2 vor dem Reaktandeneinlauf 43 endet. Insofern ist mit den Bezugszeichen 53 der radial aisgerichtete Innenzulauf 53 für das innere Rohr 51 dargestellt und mit dem Bezugszeichen 54 ist der dazugehörige radial verlaufende Auslauf 54 gekennzeichnet. Der Fluidfluss in diesem innersten Rohr 51 ist somit ähnlich zu dem der anderen Rohre 51.

Aus der Fig. 3 kann zum Beispiel auch ersehen werden, dass die Mischerblechanordnung 64 im Übergangsbereich zwischen den beiden Rohren aus sechs identischen aber jeweils um 90 Grad gedrehten Mischblecheinsätzen besteht, wie sie der Fachmann verwendet. Dabei kann der Rohrreaktor 2 im Querschnitt eckig oder rund ausgestaltet sein, was den Innendurchmesser angeht. Die Mischerblecheinsätze 64 sind entsprechend dem Innendurchmesser des Übergangsbereichs ausgestaltet. Der Vorteil an einem eckigen Innenraum hier ist die Sicherstellung, dass die Mischerblecheinsätze 64 nicht um die Längsachse der Vorrichtung rotieren können und insofern ein einfach einsetzbares System darstellen, während eine solche Eigenrotation bei einem runden Rohrinnenquerschnitt durch bauliche Massnahmen vermieden wird. Auch bei runden Durchmessern drehen Einsätze nicht.

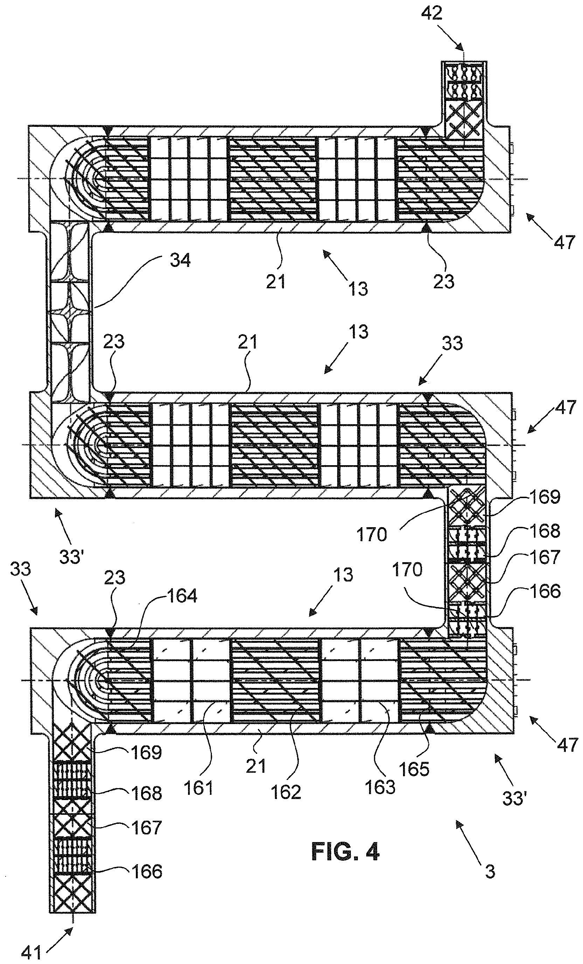

Die Fig. 4 zeigt eine schematische teilweise geschnittene Darstellung eines dreistufigen Rohrreaktors gemäss einem weiteren Ausführungsbeispiel der Erfindung, bei dem es sich nicht um einen gradlinig verlaufenden Rohreaktor 3 handelt, sondern die Ein- und Ausläufe jeweils um 90 Grad zur jeweiligen Hauptachse des Rohreaktors 3 gedreht sind. Sie sind dabei dann in vorwärts Richtung ausgerichtet, wobei vorwärts ausgerichtet bedeutet, dass sich ein mäanderförmiger Reaktor ergibt, bei dem hier der Auslauf 42 eine grössere Reaktorlänge auf gleicher Bauhöhe ermöglicht.

Es ist auch möglich, aber hier nicht zeichnerisch dargestellt, dass die Umleitung, die zu der dritten Stufe führt, aus der Zeichenebene herausführt und der dritte Reaktor 13 dann beispielsweise über dem zweiten Reaktor 13 in Gegenrichtung ausgerichtet ist. Mit einer weiteren Umleitung oberhalb der Umleitung zwischen erstem und zweitem Reaktor 13 kann dann ein vierter Reaktor 13 oberhalb des ersten Reaktors 13 angeordnet werden, so dass ein sehr kompakter Durchlaufreaktor entsteht.

Mit dem Bezugszeichen 41 bei der Ausführungsform der Fig. 4 ist auch hier der Reaktandeneinlauf gekennzeichnet, der durch Verwendung von Mischerblechanordnungen 166, 167, 168, 169 an diesem Ort gefüllt ist. Die Mischerblechanordnungen 166 und 169 enden am Ende des Übergangsrohrs 34 quasi angrenzend an die Mischerblechanordnungen 165 (erste zu zweiter Stufe 13) oder 164 (zweite zu dritter Stufe 13). Der Einlauf geht dann in einem 90 Grad Winkel zum Einlaufbereich 33 in das Rohr 21 über, wobei die Übergangsabschnitte 23, wie beim vorherigen Ausführungsbeispiel, als umkreisförmige Schweissungen vorgesehen sind. Wie schon oben ausgeführt, kann es sich dabei auch um Flanschverbindungen oder auch Rohrverschraubungen handeln. Der Einlauf aus dem rechteckigen oder runden Einlaufrohr wird tangential an den Übergangsbereich 33 herangeführt. Die erste Stufe 13 des Rohrreaktors besteht dann aus einer Vielzahl von Wärmetauscherrohren, hier mit vierundvierzig Wärmetauscherrohren, welche nicht alle sichtbar sind, wobei der Einlauf bzw. Auslauf am Ende jedes Rohrsegments 13 fluchtend ausgestaltet ist und dabei jeweils quer zum Einlaufbereich 33 ein- oder ausgekoppelt wird. Die Versorgung des Wärmetägermediums über die Anschlüsse im Bereich 47 ist in Fig. 4 nicht dargestellt.

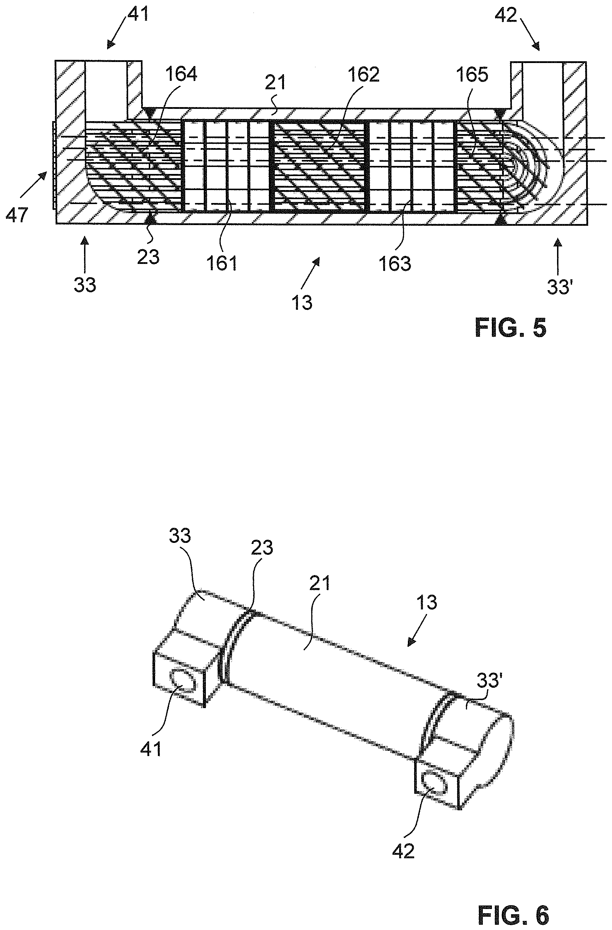

Die Fig. 5 zeigt eine schematische teilweise geschnittene Darstellung einer Stufe 13 eines Rohrreaktors, der ähnlich zu dem nach Fig. 4 ausgeführt ist; und die Fig. 6 zeigt eine schematische perspektivische Darstellung der Stufe des Rohrreaktors nach Fig. 5.

Der Reaktandeneinlauf 41 und der Reaktandenauslauf 42 sind bei diesem Ausführungsbeispiel nach der Fig. 5 (im Gegensatz zur Fig. 4) auf derselben Seite angeordnet. Die geschweissten Übergangsbereiche 23 zeigen den einfachen Zusammenbau an. An dem Einlauf 33 sind in der hier links dargestellten seitlichen Wand durchgehende Öffnungen vorgesehen, in denen die Wärmetauscherrohre 51 hindurchgeführt sind. Dabei ist mit dem Bezugszeichen 47 der Wärmetauscherfluid-Versorgungsanschlussbereich bezeichnet, in dem Wärmetauscherfluid in die hineinführenden Rohre 51 eingelassen und hindurchgepumpt wird und wo aus den gegenüberliegenden herausführenden Rohren das Wärmetauscherfluid wieder herausgeführt wird. Die Mischerblechanordnungen 161, 162 und 163 sind gemäss der im Stand der Technik bekannten Vorgehensweise als einzelne um 90 Grad verdrehte Mischelemente im Strömungskanal angeordnet, wobei diese vorbestimmte Durchbrüche für die Wärmetauscherrohre 51 aufweisen. Da die Zuführung 41 wie auch die Abführung 42 für die Reaktanden seitlich ist, können alle Wärmetauscherrohre 51 aus dem Bereich 47 in den Innenraum des Reaktors geführt werden. Mit den Bezugszeichen 164 und 165 sind die Einlauf- und Auslauf-Mischerblechanordnungen bezeichnet, die die anfänglichen Einlass/Auslass-nahen Bereiche der Rohre 51 und auch den Umlenkungsbereich der Rohre 51 umgeben und abdecken, so dass auch in diesen Bereichen eine Mischung vorgenommen wird.

**BEZUGSZEICHENLISTE**

| | | | |
|---|---|---|---|
| 1 | Rohrreaktor (1. Beispiel) | 45 | Wärmetauscherfluidauslauf |
| 2 | Rohrreaktor (2. Beispiel) | 46 | Verteilkammer |
| 3 | Rohrreaktor (3. Beispiel) | 47 | Wärmetauscherfluid-Versorgungsanschlussbereich |
| 11 | Rohrstufe | | |
| 12 | Rohrstufe | 51 | Wärmetauscherrohr |
| 13 | Rohrstufe | 52 | Wärmetauscher-U-Umlenkungsrohr |
| 21 | Rohr | | |
| 22 | Übergangsabschnitt | 53 | Innenzulauf |
| 23 | Übergangsabschnitt | 54 | Innenablauf |
| 29 | Kurvenform | 61-64 | Mischerblechanordnung |
| 31 | Einlauf | 161-163 | Mischerblechanordnung |
| 31' | Auslauf | 164 | Einlauf-Mischerblechanordnung |
| 32 | Einlauf | | |
| 32' | Auslauf | 165 | Auslauf-Mischerblechanordnung |
| 33 | Einlauf | | |
| 33' | Auslauf | 166-169 | Übergangs-Mischerblechanordnung |
| 34 | Überleitung | | |
| 41 | Reaktandaneinlauf | 170 | Übergangsgrenze |
| 42 | Reaktandanauslauf | | |
| 43 | Wärmetauscherfluideinlauf | | |
| 44 | WärmetauscherfluidUmlenkung | | |

## Patentansprüche

1. Kontinuierlicher Rohrreaktor (1; 2; 3) mit mindestens zwei in Flussrichtung von einzufüllenden Reaktanden (41) hintereinander angeordneten Stufen (11; 12; 13) von Wärmetauschermischern mit jeweils einem Innenvolumen, in dem jeweils Wärmetauscherrohre (51) geführt sind, wobei in jeder Stufe mindestens ein Mischelement (61-64; 161-163) vorgesehen ist, welches im Querschnitt das Innenvolumen über die Länge der Wärmetauscherrohre (51) ausfüllt und dabei die in Längsrichtung der Stufe verlaufenden Abschnitte der Wärmetauscherrohre (51) umgibt, und wobei in einer Überleitung (34) ohne Wärmetauscherrohre (51) zwischen zwei aufeinanderfolgenden Stufen (11, 12, 13) von Wärmetauschermischern mindestens ein Überleitungs-Mischelement (63, 64; 166-169) angeordnet ist, welches im Querschnitt das Innenvolumen über die Länge der Überleitung (34) ausfüllt, **dadurch gekennzeichnet,**
**dass** die Wärmetauscherrohre (51) in einem Bereich vor der Überleitung (34) um 180 Grad gebogen sind, und
**dass** Umlenkungsbereiche (44) der Wärmetauscherrohre (51) innerhalb einer Stufe (11, 12, 13) Umlenkungs-Mischelemente (62; 164) aufweisen, die im Querschnitt das Innenvolumen über die Länge des Bereichs der um 180 Grad gebogenen Wärmetauscherrohre (51) im wesentlichen vollständig abdecken.

2. Rohrreaktor (1; 2; 3) nach Anspruch 1, **dadurch gekennzeichnet, dass** das oder die Überleitungs-Mischelemente (62; 64; 166-169) die Überleitung (34) derart im wesentlichen vollständig ausfüllen, dass das oder die Überleitungs-Mischelemente (62; 64; 166-169) bis an den Innendurchmesser der Überleitung (34) und über die Länge der Überleitung (34) reichen.

3. Rohrreaktor (1; 2; 3) nach Anspruch 1 oder 2, **dadurch gekennzeichnet, dass** ein Einleitungsbereich (33') der Wärmetauscherrohre (51) Einleitungs-Mischelemente (165) aufweist, die die Wärmetauscherrohre (51) von ihrem Austritt aus einer Wand des Einleitungsbereiches (33') an bis zum ersten im Wärmetauscherrohr (51) angeordneten Mischelement (61-64; 161-163) im Querschnitt des Innenvolumens vom Austritt aus der Wand des Einleitungsbereichs (33') bis zum ersten im Wärmetauscherrohr (51) angeordneten Mischelement (61-64; 161-163) im wesentlichen vollständig abdecken.

4. Rohrreaktor (1; 2; 3) nach einem der Ansprüche 1 bis 3, **dadurch gekennzeichnet, dass** jede Stufe (11; 12; 13) des Rohrreaktors (1; 2; 3) ein zentrales das Innenvolumen bereitstellende Rohr (21) und an den beiden Enden des Rohrs (21) ein mit dem Rohr (21) verbundenen Einlaufbereich (31; 32; 33) beziehungsweise ein mit dem Rohr (21) verbundenen Auslaufbereich (31'; 32'; 33') umfasst.

5. Rohrreaktor (1; 2; 3) nach Anspruch 4, **dadurch gekennzeichnet, dass** die Verbindung zwischen Einlaufbereich (31; 32; 33) oder Auslaufbereich (31'; 32'; 33') und Rohr eine verschraubte Flanschverbindung (22), eine umfänglich verlaufende Schweissverbindung (23) oder eine Rohrschraubverbindung ist.

6. Rohrreaktor (1; 2; 3) nach einem der Ansprüche 1 bis 5, **dadurch gekennzeichnet, dass** die Zuleitung bzw. die Ableitung der Reaktanden aus dem Rohrreaktor (1; 2; 3) quer zur Hauptachse einer Stufe des Rohrreaktors verläuft und tangential zur Aussenwand umgeleitet wird.

7. Rohrreaktor (1; 2; 3) nach einem der Ansprüche 1 bis 5, **dadurch gekennzeichnet, dass** die Zuleitung bzw. die Ableitung der Reaktanden aus dem Rohrreaktor (1; 2; 3) in Richtung der Hauptachse einer Stufe des Rohrreaktors verläuft und die Aufweitung bzw. Verringerung vom Innenvolumendurchmesser der Zuleitung zum Innenvolumendurchmesser der Stufe bzw. vom Innenvolumendurchmesser der Stufe zum Innenvolumendurchmesser der Ableitung durch einen konischen, oder im Querschnitt elliptischen, parabelförmigen oder hyperboloiden Wandverlauf beschreibbar ist.

## Claims

1. A continuous tubular reactor (1; 2; 3) having at least two stages (11; 12; 13) of heat exchanger mixers, arranged one behind the other in the flow direction of reactants (41) to be filled, each stage having an internal volume in which heat exchanger tubes (51) are respectively guided, each stage having at least one mixing element (61-64; 161-163), which in cross-section fills the internal volume over the length of the heat exchanger tubes (51) and thereby surrounds the sections of the heat exchanger tubes (51) running in the longitudinal direction of the stage, and wherein, in a transfer line (34) without heat exchanger tubes (51) between two successive stages (11, 12, 13) of heat exchanger mixers, at least one transfer mixing element (63, 64; 166-169) is arranged, which in cross-section fills the internal volume over the length of the transfer line (34), **characterized**
**in that** the heat exchanger tubes (51) are bent by 180 degrees in an area before the transfer line (34), and
**in that** deflection regions (44) of the heat exchanger tubes (51) within a stage (11, 12, 13) have deflection mixing elements (62; 164) which, in cross-section, substantially completely cover the internal volume over the length of the region of the heat exchanger tubes (51) bent by 180 degrees.

2. The tubular reactor (1; 2; 3) according to claim 1, **characterized in that** the transfer mixing element or elements (62; 64; 166-169) substantially completely fill the transfer line (34) in such a way that the transfer mixing element or elements (62; 64; 166-169) extend to the inner diameter of the transfer line (34) and over the length of the transfer line (34).

3. The tubular reactor (1; 2; 3) according to claim 1 or 2, **characterized in that** an inlet region (33') of the heat exchanger tubes (51) has inlet mixing elements (165) which essentially completely cover the heat exchanger tubes (51) from their outlet from a wall of the inlet region (33') to the first mixing element (61-64; 161-163) arranged in the heat exchanger tube (51) in the cross-section of the internal volume from the outlet from the wall of the inlet region (33') to the first mixing element (61-64; 161-163) arranged in the heat exchanger tube (51).

4. The tubular reactor (1; 2; 3) according to any one of claims 1 to 3, **characterized in that** each stage (11; 12; 13) of the tubular reactor (1; 2; 3) comprises a central tube (21) providing the internal volume and, at the two ends of the tube (21), an inlet region (31; 32; 33) connected to the tube (21) and an outlet region (31'; 32'; 33') connected to the tube (21), respectively.

5. The tubular reactor (1; 2; 3) according to claim 4, **characterized in that** the connection between the inlet region (31; 32; 33) or the outlet region (31'; 32'; 33') and the tube is a bolted flange connection (22), a circumferentially extending welded connection (23) or a tube bolted connection.

6. The tubular reactor (1; 2; 3) according to any one of the claims 1 to 5, **characterized in that** the supply line or the discharge line of the reactants from the tubular reactor (1; 2; 3) runs transversely to the main axis of a stage of the tubular reactor and is diverted tangentially to the outer wall.

7. The tubular reactor (1; 2; 3) according to any one of the claims 1 to 5, **characterized in that** the supply line or the discharge line of the reactants from the tubular reactor (1; 2; 3) runs in the direction of the main axis of a stage of the tubular reactor and the expansion or the reduction of the internal volume diameter of the supply line to the internal volume diameter of the stage or of the internal volume diameter of the stage to the internal volume diameter of the discharge line can be described by a conical, or in cross-section elliptical, parabolic or hyperbolic wall course.

## Revendications

1. Réacteur tubulaire continu (1 ; 2 ; 3) comprenant au moins deux étages (11 ; 12 ; 13) de mélangeurs à échangeur de chaleur, disposés l'un derrière l'autre dans le sens d'écoulement des réactifs (41) à remplir, chaque étage présentant un volume interne dans lequel des tubes échangeur de chaleur (51) sont respectivement guidés, où au moins un élément mélangeur (61-64 ; 161-163) est prévu à chaque étage, qui remplit en section transversale le volume interne sur la longueur des tubes échangeurs de chaleur (51) et entoure ainsi les sections des tubes échangeurs de chaleur (51) s'étendant dans la direction longitudinale de l'étage, et où au moins un élément mélangeur de transfert (63, 64 ; 166-169), qui remplit en section transversale le volume interne sur la longueur de la conduite de transfert (34), est disposé dans une conduite de transfert (34) sans tubes échangeur de chaleur (51) entre deux étages (11, 12, 13) successifs de mélangeurs à échangeur de chaleur, **caractérisé**
**en ce que** les tubes échangeur de chaleur (51) sont courbés à 180 degrés dans une zone avant la conduite de transfert (34), et
**en ce que** des zones de déflexion (44) des tubes échangeur de chaleur (51) à l'intérieur d'un étage (11, 12, 13) présentent des éléments de mélange de déflexion (62 ; 164) qui, en section transversale, couvrent pratiquement complètement le volume interne sur la longueur de la zone des tubes échangeur de chaleur (51) courbés à 180 degrés.

2. Réacteur tubulaire (1 ; 2 ; 3) selon la revendication 1, **caractérisé en ce que** le ou les éléments mélangeurs de transfert (62 ; 64 ; 166-169) remplissent sensiblement complètement la conduite de transfert (34) de telle sorte que le ou les éléments mélangeurs de transfert (62 ; 64 ; 166-169) s'étendent jusqu'au diamètre intérieur de la conduite de transfert (34) et sur la longueur de la conduite de transfert (34).

3. Réacteur tubulaire (1 ; 2 ; 3) selon la revendication 1 ou 2, **caractérisé en ce qu'**une zone d'entrée (33') des tubes échangeur de chaleur (51) présente des éléments mélangeurs d'entrée (165) qui couvrent essentiellement complètement les tubes échangeur de chaleur (51) depuis leur sortie depuis une paroi de la zone d'entrée (33') vers le premier élément mélangeur (61-64; 161-163) disposé dans le tube échangeur de chaleur (51) dans la section transversale du volume interne de la sortie de la paroi de la zone d'entrée (33') au premier élément mélangeur (61-64 ; 161-163) disposé dans le tube échangeur de chaleur (51).

4. Réacteur tubulaire (1 ; 2 ; 3) selon l'une quelconque des revendications 1 à 3, **caractérisé en ce que** chaque étage (11 ; 12 ; 13) du réacteur tubulaire (1 ; 2 ; 3) comprend un tube central (21) fournissant le volume interne et, aux deux extrémités du tube (21), une zone d'entrée (31 ; 32 ; 33) reliée au tube (21) et une zone de sortie (31' ; 32' ; 33') reliée au tube (21).

5. Réacteur tubulaire (1 ; 2 ; 3) selon la revendication 4, **caractérisé en ce que** la liaison entre la zone d'entrée (31 ; 32 ; 33) ou la zone de sortie (31' ; 32' ; 33') et le tube est un raccord à bride boulonné (22), un raccord soudé (23) s'étendant sur la périphérie ou un raccord à vis pour tube.

6. Réacteur tubulaire (1 ; 2 ; 3) selon l'une quelconque des revendications 1 à 5, **caractérisé en ce que** la conduite d'alimentation ou la conduite de décharge des réactifs du réacteur tubulaire (1 ; 2 ; 3) s'étend transversalement à l'axe principal d'un étage du réacteur tubulaire et est conduite tangentiellement par rapport à la paroi extérieure.

7. Réacteur tubulaire (1 ; 2 ; 3) selon l'une quelconque des revendications 1 à 5, **caractérisé en ce que** la conduite d'alimentation ou la conduite de décharge des réactifs du réacteur tubulaire (1 ; 2 ; 3) s'étend dans la direction de l'axe principal d'un étage du réacteur tubulaire et l'augmentation ou la réduction du diamètre de volume interne de la conduite d'alimentation au diamètre de volume interne de l'étage ou du diamètre de volume interne de l'étage au diamètre de volume interne de la conduite de refoulement peut être décrite par une paroi conique, ou en section transversale elliptique, parabolique ou hyperbolique.
